(19) Europäisches Patentamt
European Patent Office
Office européen des brevets

(11) EP 0 718 323 A2

# (12) EUROPEAN PATENT APPLICATION

(43) Date of publication:
26.06.1996 Bulletin 1996/26

(51) Int. Cl.[6]: **C08F 210/18**, C08F 4/642

(21) Application number: 95119967.8

(22) Date of filing: 18.12.1995

(84) Designated Contracting States:
DE FR IT NL

(30) Priority: 19.12.1994 JP 315195/94

(71) Applicant: SUMITOMO CHEMICAL COMPANY LIMITED
Osaka-shi, Osaka 541 (JP)

(72) Inventors:
- Yamamoto, Keisaku
Ichihara-shi, Chiba-ken (JP)
- Wakatsuki, Kizuku
Ichihara-shi, Chiba-ken (JP)
- Hozumi, Hidetake
Ichihara-shi, Chiba-ken (JP)

(74) Representative: VOSSIUS & PARTNER
Postfach 86 07 67
81634 München (DE)

## (54) Ethylene type quaternary copolymer rubber

(57) The present invention provides an ethylene type quaternary copolymer rubber which is formed when ethylene, an α-olefin, a non-conjugated diene, and a vinylidene aromatic monomer are polymerized. More specifically, it relates to an ethylene type quaternary copolymer having a low crystallinity which can be easily bonded and blended with a diene type rubber and to which such properties as mechanical strength, abrasion resistance, and resistance to dynamic fatigue can be effectively imparted. The quaternary copolymer rubber in accordance with the present invention has characteristics that (1) the non-conjugated diene has a content of 0.1 to 10 mol%; (2) the vinylidene aromatic monomer has a content of 0.1 to 45 mol%; (3) the limiting viscosity [η] measured at 70°C in xylene is 0.5 to 10 dl/g; (4) the glass transition temperature (Tg) measured by a differential scanning calorimeter (DSC) is a single value and not higher than 0°C; and (5) the portion soluble to methyl ethyl ketone is not greater than 2% by weight.

EP 0 718 323 A2

## Description

The present invention relates to an ethylene type quaternary copolymer rubber. More specifically, it relates to an ethylene type quaternary copolymer having a low crystallinity, which can be sulfur-vulcanized, easily bonded and blended with diene type rubber and to which such properties as mechanical strength, abrasion resistance, and resistance to dynamic fatigue can be effectively imparted.

Ethylene/propylene/non-conjugated diene copolymer rubber (EPDM) using ethylene, propylene and a non-conjugated diene as monomers has been known to be excellent in ozone resistance, weather resistance, thermal aging resistance, and drug resistance since it does not include a double bond in its main chain. Also, in EPDM, the molecular weight, the kind and content of the non-conjugated diene, and the ratio of ethylene/propylene can be adjusted. Further, its molecular weight distribution and composition distribution can be adjusted so as to control its processability and physical properties. While having such excellent characteristics, EPDM have a problem in that characteristics such as mechanical strength, abrasion resistance, and resistance to dynamic fatigue are not always sufficient in light of the practical requirement level. Namely, there has been a limit to the improvement in the above-mentioned characteristics effected by controlling the polymer structure and compounding method.

As means for improving the above-mentioned characteristics of EPDM, bonding or blending with diene type rubbers such as natural rubber, isoprene rubber, SBR, and BR which are excellent in mechanical strength, abrasion resistance, and resistance to dynamic fatigue can be considered. However, due to the polarity difference resulting from the conventionally-known low polarity of EPDM, the modification of EPDM effected by the above-mentioned diene rubbers is problematic in compatibility or covulcanization and, accordingly, a desirable bonding or blending effect cannot be obtained sufficiently.

On the other hand, there have been known polymers having a vinylidene aromatic monomer, for example, binary or ternary polymers such as ethylene/styrene polymer and ethylene/$\alpha$-olefin/styrene polymer comprising ethylene, $\alpha$-olefin, and styrene. For example, these polymers have been known to be manufactured by using a (tertiary butylamido)dimethyl(tetramethyl-$\eta^5$-cyclopentadienyl) silane titanium dichloride/methyl aluminoxane catalyst system (JP-A-3-163088 (1991)) and a (tertiary butylamido)dimethyl(tetramethyl-$\eta^5$-cyclopentadienyl) silane titanium dimethyl/tris(pentafluorophenyl) borane catalyst system (JP-A-5-194641 (1993)).

However, since these copolymers containing a vinylidene aromatic monomer do not have a cross-linking site such as a double bond within the polymer, they are not sulfur-vulcanized, and problematic in that sulfur-vulcanized bonding with diene type rubber is difficult.

In view of the foregoing problems, the inventors diligently have studied for developing a copolymer rubber which can be sulfur-vulcanized, and provide favorable bonding and blending characteristics with respect to diene type rubber and are also excellent in mechanical strength, abrasion resistance, and resistance to dynamic fatigue and, as a result, succeeded in developing an ethylene type quaternary copolymer rubber obtained when respectively desired amounts of a non-conjugated diene and a vinylidene aromatic monomer are copolymerized with ethylene and an $\alpha$-olefin. Also, it has been found that, as compared with the conventional EPM and EPDM, this rubber can be sulfur-vulcanized, bonded, by vulcanization, and blended with diene type rubber without losing its characteristics. Thus, the present invention has been accomplished. Namely, the present invention is a copolymer comprising ethylene, an $\alpha$-olefin, a non-conjugated diene, and a vinylidene aromatic monomer in which the content of the non-conjugated diene and the content of the vinylidene aromatic monomer are changed within a desirable wide range. Also, the polymer in accordance with the present invention has a physical property to be satisfied that its limiting viscosity [$\eta$] measured at 70°C in xylene is within a predetermined range. This polymer is a random copolymer in which the individual monomers are randomly copolymerized and which has a single value of Tg in the glass transition temperature of the polymer. Also, it is characterized in that its glass transition temperature measured by a differential scanning calorimeter (DSC) is not higher than 0°C when the temperature is raised from -150°C to 160°C. Further, it is characterized in that its portion soluble to methyl ethyl ketone is not greater than a predetermined amount.

The object of the invention is to provide a novel rubber material having the above-mentioned desirable characteristics, namely, to provide a rubber which is obtained when desired amounts of the non-conjugated diene and vinylidene aromatic monomer, which are expected to exhibit the above-mentioned characteristics, are randomly copolymerized with ethylene and the $\alpha$-olefin. In the present invention, in order to develop the rubber having the above-mentioned novel characteristics, a novel catalyst system is developed and, as the polymerizable monomers, ethylene, an $\alpha$-olefin, a non-conjugated diene, and a vinylidene aromatic monomer are used, so that the rubber can be manufactured.

Namely, the present invention provides an ethylene type quaternary copolymer rubber which comprises ethylene, an $\alpha$-olefin, a non-conjugated diene, and a vinylidene aromatic monomer and further satisfies the following conditions:

(a) the content of the above-mentioned non-conjugated diene is 0.1 to 10 mol%;
(b) the content of the above-mentioned vinylidene aromatic monomer is 0.1 to 45 mol%;
(c) the limiting viscosity [$\eta$] measured at 70°C in xylene is 0.5 to 10 dl/g;

(d) the glass transition temperature (Tg) measured by a differential scanning calorimeter (DSC) is a single value and not higher than 0°C; and

(e) the portion soluble to methyl ethyl ketone is not greater than 2% by weight.

Also, the present invention provides the above-mentioned ethylene type quaternary copolymer rubber in which the content of the non-conjugated diene is 0.1 to 5 mol%.

Further, the present invention provides the above-mentioned ethylene type quaternary copolymer rubbers in which the content of the vinylidene aromatic monomer is adjusted to 0.1 to 35 mol%, 0.1 to 25 mol%, 1 to 45 mol%, 1 to 35 mol%, 1 to 25 mol%, 2 to 45 mol%, 2 to 35 mol%, 2 to 25 mol%, 4 to 45 mol%, 4 to 35 mol%, and 4 to 25 mol%.

Also, the present invention provides the above-mentioned ethylene type quaternary copolymer rubber in which the limiting viscosity [η] measured at 70°C in xylene is within a specific range, i.e., 1 to 8 dl/g or 1.5 to 5 dl/g.

Further, the present invention provides the above-mentioned ethylene type quaternary copolymer rubber in which glass transition temperature (Tg) measured by a differential scanning calorimeter (DSC) exhibits a single peak and the Tg calculated from the DSC curve is not higher than -5°C or not higher than -10°C.

Also, the present invention provides the above-mentioned ethylene type quaternary copolymer rubbers in which the portion soluble to methyl ethyl ketone is not greater than 1.5% by weight and not more than 1% by weight.

Further, the present invention provides an ethylene type quaternary copolymer rubber which is formed by polymerizing ethylene, an α-olefin, a non-conjugated diene, and a vinylidene aromatic monomer while using a catalyst system containing:

an ingredient (A) which is a transition metal complex expressed by chemical formula (1) or (2):

(1)

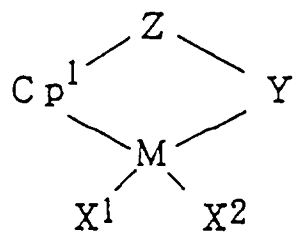

(2)

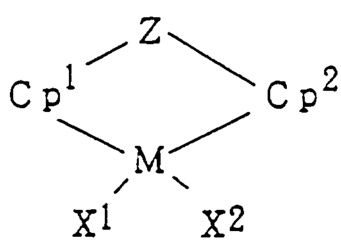

wherein M is a transition metal belonging to group IVB in periodic table; $Cp^1$ and $Cp^2$ are cyclopentadienyl group or a derivative group thereof which can be π-bonded to M or Hf; $X_1$ and $X_2$ are an anionic ligand or a neutral Lewis basic ligand; Y is a ligand having at least one member selected from the group consisting of nitrogen atom, phosphorus atom, oxygen atom, and sulfur atom; and Z is a ligand having at least one member selected from the group consisting of oxygen atom, sulfur atom, boron atom, and atoms in group IVA of periodic table, wherein Y and Z may be united together to form a condensed ring; and

an ingredient (D) which is methyl aluminoxane and has the following characteristics:

(a) the content of the non-conjugated diene is 0.1 to 10 mol%;

(b) the content of the vinylidene aromatic monomer is 0.1 to 45 mol%;

(c) the limiting viscosity [η] measured at 70°C in xylene is 0.5 to 10 dl/g;

(d) the glass transition temperature (Tg) measured by a differential scanning calorimeter (DSC) is a single value and not higher than 0°C; and

(e) the portion soluble to methyl ethyl ketone is not greater than 2% by weight.

Further, the present invention provides an ethylene type quaternary copolymer rubber which is formed by polymerizing ethylene, an $\alpha$-olefin, a non-conjugated diene, and a vinylidene aromatic monomer while using a catalyst system containing:

an ingredient (A) which is a transition metal complex expressed by chemical formula (1) or (2):

(1)

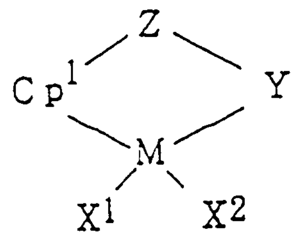

(2)

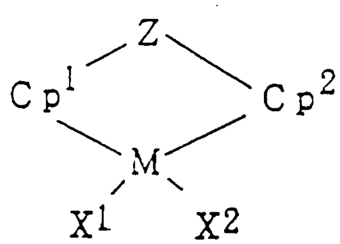

wherein M is a transition metal belonging to group IVB in periodic table; $Cp^1$ and $Cp^2$ are cyclopentadienyl group or a derivative group thereof which can be $\pi$-bonded to M or Hf; $X_1$ and $X_2$ are an anionic ligand or a neutral Lewis basic ligand; Y is a ligand having at least one member selected from the group consisting of nitrogen atom, phosphorus atom, oxygen atom, and sulfur atom; and Z is a ligand having at least one member selected from the group consisting of oxygen atom, sulfur atom, boron atom, and atoms in group IVA of periodic table, wherein Y and Z may be united together to form a condensed ring;

an ingredient (B) which is a borate compound; and

an ingredient (C) which is an organic aluminum compound;

and has the following characteristics:

(a) the content of the non-conjugated diene is 0.1 to 10 mol%;

(b) the content of the vinylidene aromatic monomer is 0.1 to 45 mol%;

(c) the limiting viscosity [$\eta$] measured at 70°C in xylene is 0.5 to 10 dl/g;

(d) the glass transition temperature (Tg) measured by a differential scanning calorimeter (DSC) is a single value and not higher than 0°C; and

(e) the portion soluble to methyl ethyl ketone is not greater than 2% by weight.

Further, the present invention provides an ethylene type quaternary copolymer rubber which is formed by polymerizing ethylene, an $\alpha$-olefin, a non-conjugated diene, and a vinylidene aromatic monomer while using a catalyst system containing:

an ingredient (A) which is a transition metal complex expressed by chemical formula (1) or (2):

(1)

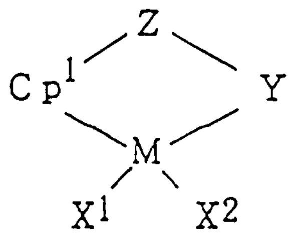

(2)

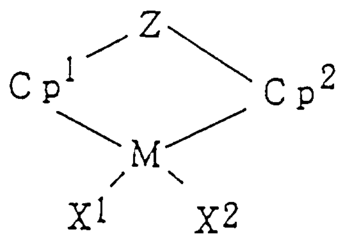

wherein M is a transition metal belonging to group IVB in periodic table; $Cp^1$ and $Cp^2$ are cyclopentadienyl group or a derivative group thereof which can be π-bonded to M or Hf; $X_1$ and $X_2$ are an anionic ligand or a neutral Lewis basic ligand; Y is a ligand having at least one member selected from the group consisting of nitrogen atom, phosphorus atom, oxygen atom, and sulfur atom; and Z is a ligand having at least one member selected from the group consisting of oxygen atom, sulfur atom, boron atom, and atoms in group IVA of periodic table, wherein Y and Z may be united together to form a condensed ring;

an ingredient (B) which is a borate compound; and

an ingredient (D) which is methyl aluminoxane and has the following characteristics:

(a) the content of the non-conjugated diene is 0.1 to 10 mol%;
(b) the content of the vinylidene aromatic monomer is 0.1 to 45 mol%;
(c) the limiting viscosity [η] measured at 70°C in xylene is 0.5 to 10 dl/g;
(d) the glass transition temperature (Tg) measured by a differential scanning calorimeter (DSC) is a single value and not higher than 0°C; and
(e) the portion soluble to methyl ethyl ketone is not greater than 2% by weight.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Figure is a graph showing a DSC curve of a polymer obtained by Example 7 (with a sample amount of about 10 mg) in which DSC conditions are described in the specification.

In the following, the present invention will be described in detail.

(Ethylene Type Quaternary Copolymer Rubber)

Term "quaternary copolymer rubber" used in the present invention refers to a rubber obtained when a predetermined amount of a vinylidene aromatic monomer is further randomly copolymerized with ethylene, an α-olefin, and a non-conjugate diene monomer, in which mole ratios of the individual monomers in the polymer are within the ranges of predetermined values and the limiting viscosity value under a predetermined condition is within the range of predetermined values. The polymer rubber having such characteristics in accordance with the present invention can be manufactured with a good yield only under the polymerization conditions disclosed in the present invention. Accordingly, the polymer in accordance with the present invention has desirable characteristics which will be explained in the following. These characteristics are defined such that molecular weight, molecular weight distribution, portion soluble to methyl ethyl ketone, temperature characteristics such as Tg, rheology characteristics such as viscosity are within predetermined ranges. Also, the polymer obtained by the method in accordance with the present invention has the above-mentioned characteristics.

(Method of Polymerization)

<u>α-Olefin, Non-Conjugated Diene, Vinylidene Aromatic Monomer</u>

In the present invention, though not restricted in particular, chain-like α-olefins having a carbon number of 3 to 10 can be preferably used. Examples thereof include propylene, 1-butene, 3-methyl-1-butene, 4-methyl-1-pentene, 1-hexene, 1-octene, and 1-decene. Also, these α-olefins may be used separately in single species as well as in a mixture of two or more. They can be appropriately selected such that the characteristics of the resulting copolymer rubber become optimal. For example, they can be selected such that a desirable physical property is obtained when the copolymer or a mixture containing the copolymer is vulcanized.

The α-olefin can be polymerized within the copolymer rubber such that the total amount of ethylene and the α-olefin is within the range of 45 to 99.8 mol%. Its amount can be selected, along with the ratios of the other two monomer ingredients, i.e., the non-conjugated diene and the vinylidene aromatic monomer, so as to impart a desirable characteristic to the rubber. Namely, it is easy for one skilled in the art to slightly adjust the reaction conditions disclosed in the present invention. Based on various experiments, one skilled in the art can easily select these conditions. (For example, based on a design of experiment, ratios of the monomers can be optimized so as to obtain a desirable rubber characteristic.) In general, the rubber elasticity tends to become insufficient when the amount of the α-olefin ingredient is too large or too small.

Also, the non-conjugated diene which can be used for making EPDM in the present invention is not restricted in particular. Various cyclic or chain-like diene compounds can be preferably used. Specific examples of the cyclic non-conjugated dienes include dicyclopentadiene, 2-methyl-2,5-norbornadiene, 5-ethylidene-2-norbornene, 5-isopropylidene-2-norbornene, 5-isopropenyl-2-norbornene, and 5-methylene-2-norbornene. Specific examples of chain-like non-conjugated dienes include 1,4-hexadiene, 1,6-octadiene, and 6-methyl-1,5-heptadiene. The content of the non-conjugated diene in the copolymer rubber is 0.1 to 10 mol% or, preferably, 0.1 to 5 mol%. These non-conjugated dienes can be appropriately selected such that the characteristics of the resulting copolymer rubber are optimized. For example, they can be selected such that a desirable physical property is obtained when the copolymer or a mixture containing the copolymer is vulcanized.

When the content of the non-conjugated diene is too small, a sufficient cross-linking density cannot be obtained, thereby reducing hardness or compression set. On the other hand, when the content is too large, glass transition temperature (Tg) and hardness increase so that a flexible rubber elasticity cannot be attained.

The non-conjugated diene ingredient can be selected to control the vulcanizing speed of the polymer. In general, the vulcanizing speed of the copolymer rubber of the present invention is lower than that of the diene type rubber. When covulcanization or bonding by vulcanization is to be effected, the same vulcanizing condition (time, in particular) should be set inevitably. When the difference in appropriate vulcanizing time between two kinds of rubbers is large, there may occur problems that one of the cross-linked products obtained within a fixed vulcanizing time becomes insufficient or vulcanization proceeds with a high density in the other. Therefore, in cases of covulcanization or bonding by vulcanization, a non-conjugated diene having a higher vulcanizing speed is preferably selected so as to obtain cross-linking products both having appropriate vulcanization density values.

The vinylidene aromatic compound used in the copolymer rubber is not always restricted. For example, styrene, α-methylstyrene, p-methylstyrene, m-methylstyrene, 2,4-dimethylstyrene, 2,5-dimethylstyrene, 3,4-dimethylstyrene, p-ethylstyrene, m-ethylstyrene, p-t-butylstyrene, p-divinylbenzene, m-divinylbenzene, trivinylbenzene, p-chlorostyrene, m-chlorostyrene, o-chlorostyrene, p-bromostyrene, m-bromostyrene, o-bromostyrene, p-fluorostyrene, m-fluorostyrene, o-fluorostyrene, and o-methyl-p-fluorostyrene can be listed. The vinylidene aromatic compounds may be used separately as well as in combination of two or more.

The content of the vinylidene aromatic compound in the copolymer is 0.1 to 45 mol% or, preferably, 0.1 to 35 mol%, 0.1 to 25 mol%, 1 to 45 mol%, 1 to 35 mol%, 1 to 25 mol%, 2 to 45 mol%, 2 to 35 mol%, 2 to 25 mol%, 4 to 45 mol%, 4 to 35 mol%, or 4 to 25 mol%. When its content is too small, the polarity of the copolymer rubber becomes so low that a sufficient covulcanization strength cannot be attained when blended or bonded with diene type rubber. Thus, the aimed

blending or bonding effect cannot be obtained. On the other hand, when the content is too large, the rubber elasticity becomes insufficient.

Among the vinylidene aromatic monomers, those having a high polarity, even with a small content, can increase the polarity of the copolymer so as to attain a desirable effect.

Catalyst System

The copolymer rubber in accordance with the present invention can be manufactured when ethylene, an α-olefin, a non-conjugated diene, and a vinylidene aromatic monomer are polymerized in the presence of a catalyst system containing some of the following ingredients (A) to (D) as a basic component.

The ingredient (A) is a transition metal complex expressed by chemical formula (1) or (2):

(1)

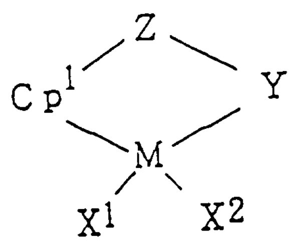

(2)

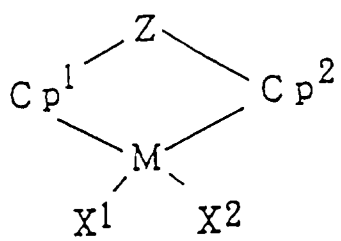

wherein M is a transition metal belonging to group IVB in periodic table; $Cp^1$ and $Cp^2$ are cyclopentadienyl group or a derivative group thereof which can be π-bonded to M or Hf; $X_1$ and $X_2$ are an anionic ligand or a neutral Lewis basic ligand; Y is a ligand having at least one member selected from the group consisting of nitrogen atom, phosphorus atom, oxygen atom, and sulfur atom; and Z is a ligand having at least one member selected from the group consisting of oxygen atom, sulfur atom, boron atom, and atoms in group IVA of periodic table, wherein Y and Z may be united together to form a condensed ring.

Specific examples of the compound expressed by chemical formula (1) which can be preferably used in the present invention include metal coordinated complexes such as (tertiary butylamido)(tetramethyl-$\eta^5$-cyclopentadienyl)-1,2-ethanediyl zirconium dichloride, (tertiary butylamido)(tetramethyl-$\eta^5$-cyclopentadienyl)-1,2-ethanediyl titanium dichloride, (methylamido)(tetramethyl-$\eta^5$-cyclopentadienyl)-1,2-ethanediyl zirconium dichloride, (methylamido)(tetramethyl-$\eta^5$-cyclopentadienyl)-1,2-ethanediyl titanium dichloride, (ethylamido)(tetramethyl-$\eta^5$-cyclopentadienyl)-1,2-methylene titanium dichloride, (tertiary butylamido)dimethyl(tetramethyl-$\eta^5$-cyclopentadienyl)silane titanium dichloride, (tertiary butylamido)dimethyl(tetramethyl-$\eta^5$-cyclopentadienyl)silane zirconium dibenzyl, (benzylamido)dimethyl(tetramethyl-$\eta^5$-cyclopentadienyl)silane titanium dichloride, and (phenylphosphido)dimethyl(tetramethyl-$\eta^5$-cyclopentadienyl)silane zirconium dibenzyl.

Also, specific examples of the compound expressed by chemical formula (2) include ethylenebis(indenyl)zirconium dichloride, ethylenebis(indenyl)zirconium dibromide, ethylenebis(indenyl)dimethyl zirconium chloride, ethylenebis(indenyl)diphenyl zirconium chloride, ethylenebis(indenyl)methyl zirconium monochloride, ethylenebis(indenyl) zirconium bis(methane sulfonate), ethylenebis(indenyl) zirconium bis(p-toluene sulfonate), ethylenebis(indenyl) zirconium bis(trifluoromethane sulfonate), ethylenebis(4,5,6,7-tetrahydroindenyl)zirconium dichloride, isopropylidene(cyclopentadienyl methylcyclopentadienyl) zirconium dichloride, dimethylsilylenebis(cyclopentadienyl) zirconium dichloride, dimethylsilylenebis(methylcyclopentadienyl) zirconium dichloride, dimethylsilylenebis(dimethylcyclopentadienyl) zirconium dichloride, dimethylsilylenebis(trimethylcyclopentadienyl) zirconium dichloride, dimethylsilylenebis(indenyl) zirconium

chloride, dimethylsilylenebis(indenyl) zirconium bis(trifluoromethane sulfonate), dimethylsilylenebis(4,5,6,7-tetrahydroindenyl) zirconium dichloride, diphenylsilylenebis(indenyl) zirconium dichloride, methylphenylsilylenebis(indenyl) zirconium dichloride, and compounds in which hafnium or titanium substitutes for zirconium in the foregoing compounds. In the above-mentioned compounds, di-substituted products of cyclopentadienyl ring include 1,2- and 1,3-substituted products, while tri-substituted products include 1,2,3- and 1,2,4-substituted products. Also, alkyl groups such as propyl and butyl include isomers such as those of n-, i-, sec-, and ter-. These compounds may be used separately or in combination of two or more.

Further, in the present invention, the above-mentioned catalysts can be used separately or in combination of two or more.

The catalyst ingredients (A) specifically listed above can be appropriately selected while slight adjustment thereof being effected by methods known to one skilled in the art (e.g., normal design of experiment) in view of desirable characteristics of the polymer, polymerization reaction conditions used (e.g., solvent, temperature, concentration, and the like in solution polymerization), and the like without substantially altering the conditions for embodying the present invention disclosed herein.

The ingredient (B) constituting the catalyst system is a compound which functions to react with the transition metal M in the above-mentioned ingredient (A) so as to form an ionic complex. Namely, the ingredient (B) is a compound which makes the above-mentioned transition metal complex cationic, while not reacting but rather weakly coordinating or interacting with thus generated cationic compound and providing a counter anion thereto. Specific examples thereof which can be preferably used in the present invention include those containing an active proton such as ammonium salts, sulfonium salts, and phosphonium salts of tetrakisphenyl borate and tetrakis(pentafluorophenyl) borate. Also, specific examples thereof containing no active proton but a Lewis acid such as carbonium ion include ionic compounds such as triphenylcarbenium tetrakis(pentafluorophenyl) borate. Further, other than the above-mentioned ionic compounds, there can be used electron acceptors such as tris(pentafluorophenyl)boron which, though being a neutral compound, have a Lewis acidity sufficient for changing a neutral complex (A) into a cationic compound and, after the complex (A) is cationized, providing an ionic counter anion.

As the ingredient (B), there can be listed ionic compounds and neutral Lewis acidic compounds having an ion pair such as that expressed by the following chemical formula (3):

$$[D^+][E^-] \qquad (3)$$

Specific examples of $[D^+]$ expressed by chemical formula (3) include compounds containing an active proton such as trimethylammonium, triethylammonium, tripropylammonium, tributylammonium, N,N-dimethylanilinium, N,N-diethylanilinium, N,N,2,4,6-pentamethylanilinium, triphenyl phosphonium, tri(o-tolyl)phosphonium, tri(p-tolyl)phosphonium, and tri(mesityl)phosphonium as well as triphenylcarbenium ion and tropylium ion which do not contain an active proton.

Also, specific examples of $[E^-]$ include tetraphenyl borate, tetra(pentafluorophenyl) borate, tetra(o-fluorophenyl) borate, tetra(p-fluorophenyl) borate, tetra(m-fluorophenyl) borate, tetra(3,5-difluorophenyl) borate, tetra(2,5-difluorophenyl) borate, tetra(2,6-difluorophenyl) borate, tetra(o-tolyl) borate, tetra(p-tolyl)borate, tetra(2,5-dimethylphenyl) borate, octadeca borate, dodeca borate, 1-carbaundeca borate, and 1-carbadodeca borate.

Further, specific examples of the neutral compounds which can cationize the ingredient (A) include tri(pentafluorophenyl)borane, tri(o-fluorophenyl)borane, tri(p-fluorophenyl)borane, tri(m-fluorophenyl)borane, tri(3,5-difluorophenyl)borane, tri(2,5-difluorophenyl)borane, and dimethylfluoroaluminum.

The cocatalyst ingredients (B) specifically listed above can be optimally selected according to methods known to one skilled in the art (e.g., normal design of experiment) in view of desirable characteristics of the polymer, polymerization reaction conditions used [e.g., solvent, temperature, concentration, selection of catalyst ingredient (A), and the like in solution polymerization], and the like without substantially altering the conditions for embodying the present invention disclosed herein.

The ingredient (C) constituting the catalyst system of the present invention is an organic aluminum compound. An organic aluminum compound which can be preferably used in the present invention is typically expressed by the following chemical formula (4):

$$AlR^bR^{b'}R^{b''} \qquad (4)$$

wherein $R^b$, $R^{b'}$, and $R^{b''}$ may be identical to or different from each other, indicating hydrogen, halogen, amido group, alkoxy group, or hydrocarbon group.

Specific examples of the ingredient (C) include trimethylaluminum, triethylaluminum, triisopropylaluminum, tri(n-propyl)aluminum, triisobutylaluminum, tri(n-butyl)aluminum, tri(n-hexyl)aluminum, tri(n-octyl)aluminum, dimethylaluminum chloride, diisopropylaluminum chloride, di(n-propyl)aluminum chloride, isobutylaluminum dichloride, di(n-butyl)aluminum chloride, dimethylaluminum ethoxide, diethylaluminum ethoxide, diisopropylaluminum ethoxide, di(n-propyl)aluminum ethoxide, diisobutylaluminum ethoxide, di(n-butyl)aluminum ethoxide, dimethylaluminum hydride, di(n-propyl)aluminum hydride, disiobutylaluminum hydride, and di(n-butyl)aluminum hydride.

The ingredient (D) constituting the catalyst system of the present invention is an aluminoxane which is generally expressed by the following chemical formula (5) or (6). Namely:

(5) a chain-like aluminoxane

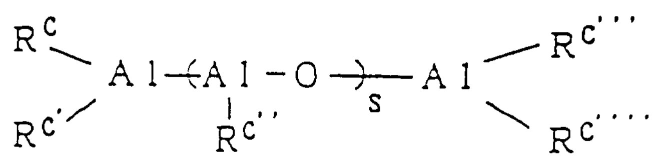

wherein $R^{c}$, $R^{c'}$, $R^{c''}$, $R^{c'''}$, and $R^{c''''}$ are hydrocarbons having a carbon number of 1 to 8, s represents a degree of polymerization which is normally 3 to 50 and preferably 7 to 40 or

(6) a cyclic alkyl aluminoxane

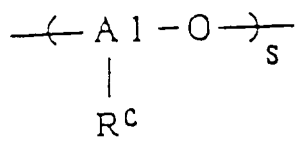

wherein $R^{c}$ is the same as that of formula (5) and s represents a degree of polymerization which is normally 3 to 50 and preferably 7 to 40.

In the present invention, among the compounds expressed by chemical formulas (5) and (6), aluminoxanes whose degree of polymerization is at least 7 are preferable. In particular, methyl aluminoxane whose degree of polymerization is at least 7 is preferable.

The organic aluminum compounds expressed by the above-mentioned formulas (4), (5), and (6) may be used separately or in combination of two or more.

The catalyst system including the above-mentioned ingredients (A), (B), (C), and (D) can be easily optimized and selected by one skilled in the art in order to obtain desirable characteristics in the resulting copolymer, without necessitating substantial alteration of the conditions disclosed herein. For example, in order to attain a specific range of desirable characteristics in the resulting copolymer rubber, optimal manufacturing conditions can be easily found when the kinds, concentrations, and quantitative ratios of the catalyst ingredients (A) to (D) most suitable for the polymerization reaction conditions such as the kinds, amounts, degree of polymerization, and molecular weight distribution of the monomers used are selected on the basis of a design of experiment or the like which is known to one skilled in the art.

While the catalyst ingredient (A) is essential to the present invention, the other ingredients can be individually selected in combination with the catalyst ingredient (A), on the basis of optimization of desirable characteristics in the resulting copolymer. In particular, in the method of making the polymer in accordance with the present invention, the following three kinds of combinations are preferable. Namely, the copolymer rubber of the present invention may be manufactured by using a kind of the catalyst system obtained when the above-mentioned ingredients (A) to (D) are combined as follows:

catalyst system 1: (A)+(B)+(C)
catalyst system 2: (A)+(B)+(D)
catalyst system 3: (A)+(D)

The catalyst system 1 including the ingredients (A), (B), and (C) is suitable for making the polymer in accordance with the present invention having desirable characteristics. In this case, the ratios of the individual ingredients influence

the characteristics of the polymer. While the ratio of the ingredients (A):(B):(C) is not restricted in particular, the ratio (mole ratio) of the ingredients (A):(B) is preferably at 1:0.01 to 1:100, more preferably at 1:0.5 to 1:10, and further preferably at 1:1 to 1:5. Also, the amount of the ingredient (C) used with respect to 1 mol of the ingredient (A) is preferably 1 to 1,000 mol, more preferably 1 to 500 mol, and further preferably 1 to 300 mol. .

The form of use of the catalyst ingredients is not restricted in particular. For example, the ingredients (A) and (B) may be brought into contact with each other beforehand, a product generated by contact may be isolated and washed before use, or they may be brought into contact with each other in a polymerization system. Also, the ingredient (C) may be brought into contact with the ingredient (A) or (B) beforehand or may be used in contact with a contact product of the ingredients (A) and (B). The catalyst may be prepared beforehand by bringing the ingredients into contact with each other or may be prepared and used on the spot by making them into contact with each other in the polymerization system. Further, the catalyst ingredients may be added to the monomers and polymerization solvent beforehand or may be added to and used within the polymerization system. If necessary, the catalyst ingredients may be carried by an inorganic layer-like compound or an organic support.

The catalyst system 2 refers to a case where the ingredient (D) substitutes for the ingredient (C) in the catalyst system 1. It can make the polymer in accordance with the present invention having desirable characteristics. The conditions for using it are basically the same as those of the catalyst system 1. In particular, since the compounds expressed by formulas (5) and (6) are expensive, it is more preferable for them to be used in smaller amounts

The catalyst system 3, which includes at least the ingredients (A) and (D), is used for making the polymer in accordance with the present invention having desirable characteristics. When the ratios of the ingredients (A) and (D) are altered, the above-mentioned characteristics can be changed. The catalyst may be prepared by bringing these ingredients into contact with each other beforehand or may be prepared on the spot by making them into contact with each other within the polymerization system. Also, the catalyst ingredients may be added to the monomers and polymerization solvent beforehand or may be added to and used within the polymerization system. If necessary, the catalyst ingredients may be carried by an inorganic layer-like compound or an organic support.

Other combination of those catalytic ingredients,

catalyst system 4: (A)+(B)+(C)+(D)
catalyst system 5: (A)+(B)

are also suitable for copolymer rubbers having particular polymer characteristics.

In particular, in the present invention, [moles of the aluminoxane defined in the ingredient (D)]/[moles of the transition metal in the ingredient (A)] is preferably at 1 to $10^6$ and more preferably at 10 to $10^4$. Also, in this catalyst system, as the form of use of the catalyst ingredients is not restricted in particular, the ingredients (A) and (D) may be brought into contact with each other before being added to the polymerization system or may be used in contact with each other within the polymerization system.

In terms of the amount of aluminum remaining in the product, which may become problematic when a catalyst system based on an aluminum compound is used, the catalyst system 3 is considered to contain the smallest amount. While the catalyst systems are different from each other in terms of the heat generated by polymerization, a catalyst system which is relatively easy to control can be selected. For example, the catalyst system 1 exhibits a relatively mild reaction heat.

Polymerization Reaction

The polymerization method for making the copolymer rubber having desirable characteristics in accordance with the present invention is not restricted in particular. General polymerization conditions for ethylene, propylene, and the like according to Ziegler-Natta catalyst system or Kaminsky catalyst system can be preferably used. As long as the copolymer having preferable characteristics in accordance with the present invention can be manufactured, any methods such as block polymerization method in which a monomer is used as a solvent, solution polymerization method in an appropriate solvent, suspension method in an appropriate inactive solvent, and vapor phase polymerization method under various pressures may be used. Also, both batch and continuous methods may be used.

Without substantially altering the constitution concerning the method of making the copolymer having desirable characteristics in accordance with the present invention disclosed herein, specific control conditions necessary for each polymerization method such as selection of the catalyst system in accordance with the present invention and, if necessary, addition of an appropriate supporting agent or the like to the catalyst system in accordance with the present invention, adjustment of the concentrations of the polymerizable monomers, adjustment of the reaction temperature, and the method of isolating the resulting polymer can be optimized according to normal techniques (e.g., Saeki, Yasuharu and Omi, Shinzo, "New Polymer Manufacturing Process", Kogyo Chosakai K.K.).

Though the polymerization effected by solution polymerization method is disclosed in Examples of the present invention, the method of making the copolymer rubber having desirable conditions in accordance with the present invention is not restricted thereto. The above-mentioned control conditions for various polymerization reactions can be optimized by utilizing the findings in the solution polymerization method. Accordingly, one optimal embodiment of the present invention based on the solution polymerization method will be explained in the following.

Solution Polymerization Method

In the present invention, the order of contact of the catalyst ingredients with respect to each other for adjusting the catalyst system is not restricted in particular. It can be selected according to the polymerization condition used, the kinds of monomers used, condition for addition, or the like. For example, the ingredients (A) and (B) may be brought into contact with each other beforehand and then used as they are. Alternatively, a contact product obtained when the ingredients (A) and (B) are brought into contact with each other may be isolated, washed, and then used. Also, within the polymerization system, the monomers may be brought into contact with the contact product of ingredients (A) and (B).

Further, the ingredient (C) or (D) may be brought into contact with the ingredient (A) or (B) or the contact product of the ingredients (A) and (B) beforehand.

These ingredients may be brought into contact with each other and adjusted outside of the polymerization reaction system beforehand or may be brought into contact with each other within the polymerization reaction system. Also, the catalyst ingredients may be added to the monomers or the polymerization solvent beforehand or may be directly added to the polymerization system. Further, if necessary, the catalyst ingredients may be used as being carried by inorganic (e.g., zeolite type) or organic (e.g., polymer beads) supports. While not restricted in particular, specific examples of the inactive hydrocarbon solvents used for preparing the catalyst beforehand include aliphatic hydrocarbons such as propane, butane, pentane, hexane, heptane, octane, decane, dodecane, and kerosine; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and mixtures thereof. The pressure, atmosphere, and time for preparation can be set arbitrarily. In general, the temperature for preparation is preferably within the range of -100 to 250°C. It takes a long time for preparation when the temperature is too low, whereas the catalyst activity may rather decrease due to the decomposition reaction or the like when the preparation is effected at a temperature beyond the above-mentioned range. Preferably, the catalyst is prepared at a temperature near the polymerization reaction condition.

Though not restricted in particular, specific examples of the solution polymerization solvents which can be used in the present invention include aromatic hydrocarbons such as benzene, toluene, xylene, and ethylbenzene; alicyclic hydrocarbons such as cyclopentane, cyclohexane, and methylcyclohexane; aliphatic hydrocarbons such as pentane, hexane, heptane, and octane; and halogenated hydrocarbons such as chloroform and dichloromethane. These solvents may be used separately as well as in combination of two or more. Also, monomers such as an $\alpha$-olefin may be used as the solvent or part thereof.

In order to make the copolymer rubber having desirable characteristics in the present invention, the selection of the polymerization temperature is as important as the selection of the catalyst system. In order to make the copolymer rubber having desirable characteristics in accordance with the present invention, it can be optimized according to various methods such as a design of experiment known to one skilled in the art. In general, this temperature in the present invention is preferably not lower than - 20°C but lower than 200°C, more preferably at 0 to 180°C, further preferably at 20 to 150°C. When the polymerization reaction temperature is too low, the reaction activity may become so low that the reaction practically stops proceeding. On the other hand, when the temperature is too high, the catalyst system may be deactivated due to decomposition or the like so that undesirable side reactions proceed or the polymerization reaction itself stops. Accordingly, for maintaining a high catalytic activity in accordance with the present invention and a realistic polymerization reaction speed, a preferable reaction temperature is set.

In the present invention, various normal organic chemical analyzing methods can be used for monitoring the proceeding of the reaction. Namely, by partial sampling, various spectroscopy techniques (IR, NMR, etc), solution viscosity measurement, molecular weight distribution measurement, and the like can be used for monitoring.

Though not restricted in particular, the polymerization reaction product in accordance with the present invention can be separated from the reaction solution by a method in which the solvent is eliminated by distillation, a method in which vapor is added so as to eliminate the solvent, a method in which a poor solvent such as methanol is added to effect precipitation, or the like. Also, the product recovered from the polymerization solution by separation and collection can be dried to yield a solid copolymer rubber.

In general, the copolymer rubber obtained on the basis of the manufacturing method in accordance with the present invention (e.g., solution polymerization method explained above) can have the following characteristics: Non-conjugated diene monomer content, 0.1-10 mol%, preferably 0.1-5 mol%; Vinylidene aromatic monomer content, the upper limit 45 mol%, preferably 35 mol%, more preferably 25%, and the lower limit 0.1 mol%, preferably 1%, more preferably 2 mol%, most preferably 4 mol%; Glass transition temperature (Tg) measured by a DSC, single transition not more than 0C, preferably -5C, more prefarably -10C;
Limiting viscosity in xylene at 70C, in the range between 0.5 dl/g and 10 dl/g, preferably between 1 and 8 dl/g, more

preferably between 1.5 and 5 dl/g; and Portion soluble to methyl ethyl ketone, not more than 2 wt%, preferably 1.5 wt%, more preferably 1 wt%.

Selection of Polymerization Reaction Conditions

(1) In the present invention, normal technical means known to one skilled in the art can be used for selecting main influential factors such as monomer ingredient ratios and their controlling means including selection of the catalyst system, charged monomer ratios, and manufacturing conditions so as to adjust the influence and action of these factors on the rubber characteristics.
(2) Similarly, normal technical means known to one skilled in the art can be used with respect to factors influencing the method for adjusting the molecular weight and molecular weight distribution such as the catalyst and their controlling means including the catalyst, charged monomer ratios, and manufacturing conditions so as to adjust the influence and action of these factors on the rubber characteristics.

Characteristics of Copolymer Rubber of Present Invention

(Monomer Ingredient, Randomness)

In the quaternary copolymer rubber in accordance with the present invention, the ratios of the individual monomer ingredients can be freely adjusted to exhibit desirable characteristics. In general:

(1) There may be a method in which, with respect to a terpolymer EPDM rubber of ethylene/$\alpha$-olefin/non-conjugated diene, that having desirable characteristics is selected and then a predetermined amount of a vinylidene aromatic monomer is further introduced thereto, without greatly deteriorating these characteristics, so as to add a desirable characteristic to the EPDM. In this case, a vinylidene aromatic monomer having an appropriate monomer ratio may be selectively added to an EPDM having a specific monomer ratio. Also, in this case, the ratio of the vinylidene aromatic monomer may be selected as much as about 45%. In the polymer rubber in accordance with the present invention, in particular, the effect of the vinylidene aromatic monomer becomes evident when its amount is 0.1% or more.
(2) Also, there may be a method in which, with respect to an EPM rubber of ethylene/$\alpha$-olefin, that having desirable characteristics is selected and then a predetermined amount of a non-conjugated diene is further introduced thereto together with a predetermined amount of a vinylidene aromatic monomer, without greatly deteriorating these characteristics, so as to add a preferable characteristic to the EPM. In practice, as much as about 10% of the non-conjugated diene monomer can be added. The characteristics of the polymer rubber in accordance with the present invention greatly depend on the quantitative ratios of these non-conjugated diene monomer and vinylidene aromatic monomer. Accordingly, the ratios of these monomers can be adjusted to select the characteristics of the rubber.

Further, the ratios of the ingredients such as the above-mentioned monomers existing in the copolymer rubber in the present invention can be measured by conventionally known various methods such as infrared absorption spectrum (IR spectrum) method, nuclear magnetic resonance (NMR) method, and thermal decomposition gas chromatography method. Also, the stereoregularity of the polymer in accordance with the present invention can be found on the basis of these methods. In particular, in the present invention, infrared absorption spectrum method (IR spectrum) for a polymer film (FT-IR 1720X manufactured by Perkin-Elmer Corporation or A-202 manufactured by Nippon Bunko K.K was used in the present invention) can be easily utilized. The polymers made of the individual monomers can be used as standard materials. Namely, polypropylene, polyethylene, ethylene/propylene copolymer, polystyrene, ethylene/propylene copolymer, homopolymer or copolymer of non-conjugated diene, and the like can be used as standard materials for measurement. (For example, a sample to be measured may be processed into a film of about 0.1 mm by hot press and then measured.) Measurement is based on literatures [e.g., Takayama and Usami, "Characterization of Polyethylene by Infrared Absorption Spectrum" or McRae, M.A., Madams, W.F., et al., Die Makromolekulare Chemie, 177, 461 (1976)] and characteristic absorption bands can be used, for example, such that an absorption peak at 1150 $cm^{-1}$ (belonging to branched methyl) is used as a marker for propylene monomer, an absorption peak at 1,600 $cm^{-1}$ (belonging to aromatic group) is used as a marker for the vinylidene aromatic monomer, and an absorption peak at 1,650 $cm^{-1}$ (belonging to C=C bond) is used as a marker for the non-conjugated diene monomer.

Based on the presence of its aromatic ring, the vinylidene aromatic monomer can be quantitatively determined on the basis of a UV-detection chromatogram obtained by high pressure liquid chromatography (HPLC). For example, in Examples, two pieces of TSK gel Super HM-H manufactured by Tosoh K.K. were used as being connected together in serial. For measurement, 0.1 g of a sample was dissolved in 20 ml of tetrahydrofuran. From thus obtained sample liquid, 5 µl was injected. From the area of the chromatogram obtained when the UV wavelength is set at 254 nm, the amount

of styrene ingredient in the copolymer is obtained in view of the styrene content working curve which has been made by using polystyrene.

Further, if necessary, the randomness and stereoregularity of each monomer can be measured on the basis of $C^{13}$- and $H^1$-nuclear magnetic resonance spectra. The polymer in accordance with the present invention is a random copolymer. Namely, it can be analyzed by such means as NMR and HPLC. Also, the copolymer rubber in accordance with the present invention is a low crystallinity random copolymer rubber. The fact that the copolymer rubber in accordance with the present invention is a low crystallinity random copolymer rubber can be confirmed by the following methods. Namely, a liquid chromatography (HLC) equipped with a differential refractometer (RI) and a ultraviolet and visible region detector (UV) as detectors can be used, while the ultraviolet and visible region detector being set for detecting a wavelength of 254 nm in order to detect the vinylidene aromatic monomer with a high sensitivity. When the chromatograms simultaneously measured by both detectors are analogous to each other, the vinylidene aromatic compound uniformly exists in the copolymer, namely, it is randomly copolymerized.

(Limiting Viscosity)

As explained above, one of characteristics indicated by the copolymer rubber of the present invention is a limiting viscosity under a predetermined condition. The limiting viscosity value in the present invention refers to a limiting viscosity [η] measured at 70°C in xylene. While the limiting viscosity of 0.1 to 10 dl/g is obtained in the present invention, the range of 1 to 8 dl/g is preferable and the range of 1.5 to 5 dl/g is more preferable. The processability or mechanical physical property of the resulting polymer may deteriorate when the limiting viscosity is too low, whereas the processability of the resulting polymer may deteriorate when the limiting viscosity is too high. The limiting viscosity in the present invention was measured according to the following method. Namely, the limiting viscosity [η] was measured in xylene at 70°C by using Ubbelohde's viscometer. Specifically, 300 mg of a sample were dissolved in 100 ml of xylene to prepare a solution of about 3 mg/ml. Then, this solution was diluted to about 1/2, 1/3, and 1/5. These diluted solutions were measured in a high-temperature water bath of 70°C (±0.5°C) by using Ubbelohde's viscometer. The measurement was repeated for three times in each concentration and then, from thus obtained values, an average was calculated.

(Molecular Weight Distribution)

The molecular weight distribution was measured by gel permeation chromatography (GPC)(150-C ALC/GPC apparatus manufactured by Waters Corporation). The elution solvent was o-dicholorobenzene, the measurement temperature was 140°C, the column used was Shodex Packed Column A-80M manufactured by Showa Denko K.K.), and the molecular weight standard material was polystyrene (having a molecular chain length of 68 to 205,000; manufactured by Toyo Soda K.K.). The weight average molecular weight (Mw) and the number average molecular weight (Mn) were calculated on the basis of polystyrene, while their ratio (Mw/Mn) was defined as the molecular weight distribution. As a sample to be measured, about 5 mg of the copolymer was dissolved in 5 ml of o-dichlorobenzene so as to yield a solution having a concentration of about 1 mg/1 ml. From thus obtained sample solution, 400 μl was injected. The flow rate of the elution solvent was set at 1.0 ml/min and the detection was made by the refraction detector.

Also, the molecular weight distribution of the polymer in accordance with the present invention can be changed depending on the polymerization reaction conditions. When expressed by the molecular weight (based on polystyrene) measured by gel permeation chromatography (GPC), the weight average molecular weight (Mw) of the copolymer rubber which can be made in accordance with the present invention may be about 5,000,000 to 50,000 or, in particular, about 3,000,000 to 100,000 or, more specifically, about 2,000,000 to 300,000. Also, the number average molecular weight (Mn) of the copolymer rubber which can be made in accordance with the present invention may be about 2,500,000 to 10,000 or, in particular, about 1,500,000 to 20,000 or, more specifically, about 1,000,000 to 60,000. Further, the molecular weight distribution (Mw/Mn) of the copolymer rubber which can be made in accordance with the present invention may be about 1.8 to 10 or, in particular, about 1.9 to 7 or, more specifically, about 2 to 5.

Between the above-mentioned limiting viscosity value and the molecular weight (Mw) based on polystyrene according to GPC, the relationship may be established.

(Portion Soluble to Methyl Ethyl Ketone)

In the copolymer rubber of the present invention, the portion soluble to methyl ethyl ketone is not more than 2% by weight, preferably not more than 1.5% by weight, and more preferably not more than 1% by weight. When the portion soluble to methyl ethyl ketone is too large, the homopolymer of the vinylidene aromatic compound may have been generated and thereby the characteristics of the low crystallinity random copolymer rubber may be lost. In the present invention, the portion soluble to methyl ethyl ketone is measured as follows. Namely, a sample is pressed into 6 mm x 32 mm with a thickness of 2 mm. After being weighed (D g), the sample is subjected to Soxhlet extraction using 200 cc of methyl ethyl ketone at a bath temperature of 90 to 95°C for 8 hours. After the extraction, the solvent is eliminated and

the extraction residue ingredient is dried in a vacuum at 80°C for one night. Thereafter, the sample is weighed (E g). The portion soluble to methyl ethyl ketone (% by weight) is calculated by:

$$[(D-E)/D] \times 100$$

(Thermal Characteristics)

The glass transition temperature (Tg) was determined by thermal measurement apparatus DSC 200 manufactured by Seiko Electronics Corporation. About 7 mg of a sample was set into an aluminum sample cell as a pellet and cooled from room temperature to -150°C at a rate of -20°C/min. Then, after the sample was held at the same temperature for 5 minutes, it was heated to 160°C at a rate of 10°C/min. The DSC measurement was thus conducted. The polymer in accordance with the present invention is characterized in that a single DSC curve with Tg is provided in the above-mentioned DSC measurement. As an example, Figure shows a DSC curve of the polymer sample in accordance with Example 7 of the present invention. It shows a single broad DSC curve which characterizes the present invention. As depicted, Tg is calculated from this curve. The glass transition temperature (Tg) of the polymer in accordance with the present invention based on the above-mentioned DSC method is not higher than 0°C, preferably not higher than -5°C, and more preferably not higher than -10°C.

Composition Using Rubber of Present Invention

The composition using the copolymer rubber obtained by the manufacturing method in accordance with the present invention having the foregoing characteristic parameters have rubber material characteristics, mechanical strength, abrasion resistance, resistance to dynamic fatigue, compatibility, covulcanizing property, adhesiveness, blending property, and the like which are substantially similar to those of diene type rubbers such as natural rubber, isoprene rubber, SBR, and BR which have conventionally been used. (For example, the known measuring methods disclosed in Sanshin Kagaku Kogyo K.K., Kawaoka, Yutaka, "Rubber Formulation Data Handbook", Nikkan Kogyo Shinbunsha, JIS K 6301, and the like can be used.)

For example:

(1) Mooney viscosity ($ML_{1+4}$, at 121°C) is at least 5 which corresponds to a limiting viscosity [η] of about 1 described herein.
(2) MFR (190°C) is a positive number not greater than 18.
(3) Also, under conditions similar to conventional condition, carbon black, oil, sulfur, peroxide, and the like can be added to the polymer rubber in accordance with the present invention and kneaded to form a rubber composition, which may be shaped and vulcanized to yield various kinds of rubber products. For example, compositions based on formulations shown in Tables 5 can be obtained.

Further, the characteristics of these compositions can be measured on the basis of normal testing methods. For example, known test methods can be used for compression set test, processability test, vulcanization bonding test, and the like. Based on the results of measurement effected by these tests, it is clearly understood that the copolymer rubber composition in accordance with the present invention is excellent in desirable characteristics.

Also, in the analysis of the ingredients of the rubber in the composition, the above-mentioned IR method, analysis of the vinylidene aromatic monomer by refractive index, elementary analysis, thermal decomposition gas chromatography, mass spectrography, and the like can be used to identify and quantitatively determine the fragments resulting from the individual monomers (cf. JIS methods, ASTM methods, and English-language text of polymer analysis method ...). For example, the individual monomers can easily be ascertained and quantitatively determined according to these methods.

Further, the degree of cross-linking of the rubber after vulcanization can be determined by such means as a swelling test (GOMU SHIKEN-HOU(New Version) NIPPON GOMU KYOKAI, Rubber Test Method, new version, Japan Rubber Association ed.)

In addition, if necessary, a solid $C^{13}$ nuclear resonance absorption spectrum may be used to confirm that the product is composed of the polymer in accordance with the present invention.

Examples

Though the following Examples and their Comparative Examples disclose manufacturing examples of the copolymer rubber having desirable characteristics under a solution polymerization condition using a solvent, which is one embodiment enabling the manufacturing method in accordance with the present invention, the present invention is not restricted thereto unless the gist thereof deviates therefrom.

Example 1

After a separable flask reactor having a capacity of 2 L equipped with a stirrer, a thermometer, a dropping funnel, and a reflux condenser was vacuumed, nitrogen gas was introduced therein so as to substitute for the inner atmosphere. Then, 1 L of dried toluene was introduced into this flask as a polymerization solvent. Thereafter, an ethylene/propylene mixed gas (where ethylene:propylene flow rate is 7:1 NL/min) is continuously fed thereto with normal pressure, while the temperature of the solvent was held at 50°C by using a thermostat water bath. After 300 mmol of styrene were introduced into the polymerization reactor as a monomer, 2.5 mmol of triisobutylaluminum (abridged as "TIBA" in the following) were added to the polymerization solvent.

Thereafter, 0.01 mmol of (tertiary butylamido)dimethyl(tetramethyl-$\eta^5$-cyclopentadienyl)silane dichloride titanium (synthesized in accordance with the method described in Japanese Unexamined Patent Publication Hei No. 3-163088) was added to the above-mentioned polymerization solvent and, 15 minutes thereafter, 0.05 mmol of triphenylcarbenium tetra(pentafluorophenyl) borate and 40 mmol of 5-ethylidene-2-norbornene (ENB) were simultaneously added to the polymerization solvent through respective dropping funnels so as to start polymerization. After 1 hour of polymerization, 44.9 g of an ethylene/propylene/ENB/styrene quaternary copolymer were obtained. The results are shown in Table 3.

Example 2

The procedure of Example 1 was performed except that the amounts of styrene and ENB were changed to 100 mmol and 30 mmol, respectively. The results are shown in Table 3.

Example 3

After a separable flask reactor having a capacity of 2 L equipped with a stirrer, a thermometer, a dropping funnel, and a reflux condenser was vacuumed, nitrogen gas was introduced therein so as to substitute for the inner atmosphere. Then, 1 L of dried toluene was introduced into this flask as a polymerization solvent. Thereafter, a mixed gas comprising 8 NL/min of ethylene and 1 NL/min of propylene was continuously fed with normal pressure, while the solvent temperature was held at 30°C. After 100 mmol of styrene and 25 mmol of 5-ethylidene-2-norbornene were introduced therein as monomers, 2.5 mmol of TIBA were added thereto.

Thereafter, 0.01 mmol of (tertiary butylamido)dimethyl(tetramethyl-$\eta^5$-cyclopentadienyl)silane dichloride titanium (synthesized in accordance with the method described in Japanese Unexamined Patent Publication Hei No. 3-163088) was added to the above-mentioned polymerization solvent and, 15 minutes thereafter, 0.05 mmol of triphenylcarbenium tetra(pentafluorophenyl) borate was added to the polymerization solvent through the dropping funnel so as to start polymerization.

After the reaction was completed, 43.6 g of an ethylene/propylene/ENB/styrene quaternary copolymer were obtained. The results are shown in Table 3. Examples 4 to 7

Except that the amounts of added monomers and polymerization conditions were changed as shown in Table 1, basically the same procedure as that of Example 3 was used to yield copolymers. Detailed results are shown in Table 3.

Example 8

Except that the amounts of added monomers and polymerization conditions were changed as shown in Table 2, basically the same procedure as that of Example 3 was used to yield a copolymer. Detailed results are shown in Table 3.

Example 9

Except that the $\alpha$-olefin ingredient was changed from propylene to 1-butene and that the amounts of added monomers and polymerization conditions were changed as shown in Table 1, basically the same procedure as that of Example 3 was used to yield a copolymer. Detailed results are shown in Table 3. Comparative Examples 1 to 4

Except that the amounts of added monomers and polymerization conditions were changed as shown in Table 2, basically the same procedures as those of Examples were used to yield copolymers. Detailed results are shown in Table 4.

Applied Examples 1 to 3, Comparative Applied Example 1

Using the copolymers manufactured by Examples 3 to 5 and Comparative Example 3, vulcanization bonding test with respect to SBR was performed. The copolymers in accordance with the present invention and SBR (manufactured by Sumitomo Chemical K.K.) were respectively formulated according to Tables 5 and 6 and then kneaded by a 6-inch roll so as to yield unvulcanized rubber sheets having a thickness of 1 mm. These unvulcanized sheets were layered in

a mold of 150 mm x 150 mm x 2 mm and hot-pressed at 50 kg/cm2 for 30 minutes with a press heated to 160°C so as to yield a vulcanized adhesive sheet. During this vulcanization, a Teflon sheet of 150 mm x 50 mm was inserted between the unvulcanized sheets so as to leave an unbonded portion for tong hold of tension test. Thus obtained vulcanized sheet was cut into strips of 150 mm x 20 mm x 2 mm. In each strip, the peel strength of the vulcanized and bonded portion of 100 mm x 20 mm excluding the tong hold was measured. For this measurement, a tension tester P-57 (Quick Reader) manufactured by Ueshima Seisakusho K.K. was used with a tension speed of 200 mm/min. Detailed results are shown in Table 7.

Table 1

| | Example | | | | | | | | |
|---|---|---|---|---|---|---|---|---|---|
| | 1 | 2 | 3 | 4 | 5 | 6 | 7 | 8 | 9 |
| Supply condition at polymerization | | | | | | | | | |
| Etylene NL/min | 7 | 7 | 8 | 8 | 8 | 8 | 8 | 8 | 9 |
| Propylene NL/min | 1 | 1 | 1 | 1 | 1 | 1 | 1 | 1 | 1-butene 0.5 |
| ENB mmol | 40 | 30 | 25 | 25 | 25 | 50 | 100 | 25 | 25 |
| Styrene mmol | 300 | 100 | 100 | 300 | 500 | 300 | 300 | 300 | 300 |
| TIBA mmol | 2.5 | 2.5 | 2.5 | 2.5 | 2.5 | 2.5 | 2.5 | 2.5 | 2.5 |
| (A) mmol *1 | 0.01 | 0.01 | 0.01 | 0.01 | 0.01 | 0.01 | 0.01 | 0.01 | 0.01 |
| (B) mmol *2 | 0.05 | 0.05 | 0.05 | 0.05 | 0.05 | 0.05 | 0.05 | 0.05 | 0.05 |
| Polymerization temperature (°C) | 50 | 50 | 30 | 30 | 30 | 30 | 30 | 0 | 30 |
| Polymerization time (min) | 60 | 68 | 30 | 30 | 30 | 30 | 30 | 30 | 30 |

*1 (A):(t-butylamido)dimethyl(tetramethyl-$\eta^5$-cyclopentadienyl) silane dichloride titanium
*2 (B):triphenylcarbenium tetra(pentafluorophenyl) borate

Table 2

| | Comparative Example | | |
|---|---|---|---|
| | 1 | 2 | 3 |
| Supply condition at polymerization | | | |
| Etylene NL/min | 8 | 9 | 8 |
| Propylene NL/min | 1 | 1 | 1 |
| ENB mmol | 25 | 200 | 20 |
| Styrene mmol | 1500 | 300 | 0 |
| TIBA mmol | 2.5 | 2.5 | 1.25 |
| (A) mmol *1 | 0.01 | 0.01 | 0.005 |
| (B) mmol *2 | 0.05 | 0.05 | 0.025 |
| Polymerization temperature (°C) | 30 | 30 | 30 |
| Polymerization time (min) | 30 | 30 | 30 |

*1 (A):(t-butylamido)dimethyl(tetramethyl-$\eta^5$-cyclopentadienyl) silane dichloride titanium
*2 (B):triphenylcarbenium tetra(pentafluorophenyl) borate

Table 3

| | Example | | | | | | | | |
|---|---|---|---|---|---|---|---|---|---|
| | 1 | 2 | 3 | 4 | 5 | 6 | 7 | 8 | 9 |
| Results | | | | | | | | | |
| Yield g | 44.9 | 69.7 | 43.6 | 31.1 | 35.8 | 36.1 | 26.4 | 25.3 | 17.6 |
| Copolymer structure | | | | | | | | | |
| Etylene mol% | 59.9 | 68.9 | 65.2 | 72.6 | 69.8 | 59.2 | 56.1 | 55.2 | 78.6 |
| Propylene mol% | 26.9 | 26.3 | 28.5 | 13.8 | 10.8 | 24.5 | 24.8 | 32.3 | 1-butene 9.8 |
| ENB mol% | 1.9 | 1.2 | 2.0 | 1.7 | 1.4 | 3.8 | 7.6 | 1.3 | 1.7 |
| Styrene mol% | 11.3 | 3.6 | 4.3 | 11.9 | 18.0 | 12.5 | 11.5 | 11.2 | 9.9 |
| Characteristics | | | | | | | | | |
| [η] dl/g *3 | 1.94 | 1.85 | 3.21 | 3.42 | 3.40 | 3.45 | 3.97 | 7.49 | 2.13 |
| Tg °C | -34.9 | -49.4 | -40.7 | -25.3 | -15.1 | -25.4 | -12.3 | -26.6 | -34.6 |
| MEK-soluble portion wt% *4 | 0.0 | 0.0 | 0.1 | 0.8 | 1.1 | 0.0 | 0.2 | 0.4 | 0.4 |
| Mw × $10^5$ *5 | 3.78 | 3.44 | 8.93 | 9.10 | 13.1 | 9.02 | 14.6 | 18.0 | 4.76 |
| Mn × $10^5$ *6 | 1.63 | 1.32 | 2.18 | 2.00 | 7.01 | 3.86 | 4.97 | 2.62 | 2.48 |
| Mw/Mn | 2.3 | 2.5 | 4.1 | 4.5 | 1.9 | 1.9 | 1.9 | 6.9 | 1.9 |

*3 [η]:limiting viscosity measured in xylene at 70°C
*4 MEK-soluble portion: portion soluble to methyl ethyl ketone
*5 Mw: weight average molecular weight (based on polystyrene)
*6 Mn: number average molecular weight (based on polystyrene)

Table 4

| | Comparative Example | | |
|---|---|---|---|
| | 1 | 2 | 3 |
| Results | | | |
| Yield g | 27.9 | 11.1 | 30.5 |
| Copolymer structure | | | |
| Etylene mol% | 32.3 | 54.7 | 66.2 |
| Propylene mol% | 19.1 | 24.1 | 32.0 |
| ENB mol% | 1.3 | 12.3 | 1.8 |
| Styrene mol% | 47.3 | 8.9 | 0 |
| Characteristics | | | |
| [η] dl/g *3 | 2.38 | 3.70 | 6.04 |
| Tg °C | 14.9 | 12.2 | -36.2 |
| MEK-soluble portion wt% *4 | 29.5 | 0.0 | 0.0 |
| Mw × $10^5$ *5 | 12.4 | 12.2 | 18.0 |
| Mn × $10^5$ *6 | 6.52 | 5.28 | 3.29 |
| Mw/Mn | 1.9 | 1.9 | 5.5 |

*1 (A):(t-butylamido)dimethyl(tetramethyl-$\eta^5$-cyclopentadienyl) silane dichloride titanium
*2 (B):triphenylcarbenium tetra(pentafluorophenyl) borate
*3 [η]:limiting viscosity measured in xylene at 70°C
*4 MEK-soluble portion: portion soluble to methyl ethyl ketone
*5 Mw: weight average molecular weight (based on polystyrene)
*6 Mn: number average molecular weight (based on polystyrene)

Table 5

| Copolymer Formulation of Present Invention | |
|---|---|
| Copolymer | 100 |
| Seast SO | 50 |
| Paraffin type oil | 15 |
| ZnO | 5 |
| Stearic acid | 1 |
| Soxinol TS | 1 |
| Soxinol M | 0.25 |
| Sulfur | 1 |

Table 6

| SBR Formulation | |
|---|---|
| SBR #1502 | 100 |
| IRB #6 undried product | 50 |
| ZnO | 3 |
| Stearic acid | 1 |
| Soxinol NS | 1 |
| Sulfur | 1.75 |

Soxinol TS:tetramethylthiuram monosulfide
Soxinol M: 2-mercaptobenzothiazole
Soxinol NS: N-t-butyl-2-benzothiazole sulfidamide

Table 7

| | Applied Example | | | Comparative Applied Example |
|---|---|---|---|---|
| | 1 | 2 | 3 | 1 |
| Copolymer of invention | Ex.3 | Ex.4 | Ex.5 | Comp. Ex.3 |
| Styrene mol% | 4.3 | 11.9 | 18.0 | 0 |
| SBR bonding strength (kg/20 mm) | 3.3 | 5.0 | 14.3 | 3.0 |

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

The basic Japanese Application No.315195/1994 filed on December 19, 1994 is hereby incorporated by reference.

## Claims

1. An ethylene type quaternary copolymer rubber derived from ethylene, an $\alpha$-olefin, a non-conjugated diene, and a vinylidene aromatic monomer and satisfying the following conditions:

   (a) said non-conjugated diene has a content of 0.1 to 10 mol%;
   (b) said vinylidene aromatic monomer has a content of 0.1 to 45 mol%;
   (c) a limiting viscosity [$\eta$] measured at 70°C in xylene is 0.5 to 10 dl/g;
   (d) a glass transition temperature (Tg) measured by a differential scanning calorimeter (DSC) is a single value and not higher than 0°C; and
   (e) a portion soluble to methyl ethyl ketone is not greater than 2% by weight.

2. An ethylene type quaternary copolymer rubber according to claim 1, wherein the content of said non-conjugated diene is 0.1 to 5 mol%.

3. An ethylene type quaternary copolymer rubber according to claim 1 or 2, wherein the lower limit of the content of said vinylidene aromatic monomer is 0.1, 1, 2 or 4 mol%, and the upper limit is 25, 35 or 45 mol%.

**4.** An ethylene type quaternary copolymer rubber according to any one of claims 1 to 3, wherein the limiting viscosity [η] measured at 70°C in xylene is 1 to 8 dl/g, preferably 1.5 to 5 dl/g.

**5.** An ethylene type quaternary copolymer rubber according to any of claims 1 to 4, wherein the glass transition temperature (Tg) measured by a differential scanning calorimeter (DSC) is a single value and not higher than -5°C, preferably -10°C.

**6.** An ethylene type quaternary copolymer rubber according to any of claims 1 to 5, wherein the portion soluble to methyl ethyl ketone is not greater than 1.5% , preferably 1%, by weight.

**7.** An ethylene type quaternary copolymer rubber according to any of claims 1 to 6 obtainable by polymerizing ethylene, an α-olefin, a non-conjugated diene, and a vinylidene aromatic monomer using a catalyst system containing:

an ingredient (A) which is a transition metal complex expressed by chemical formula (1) or (2):

(1)

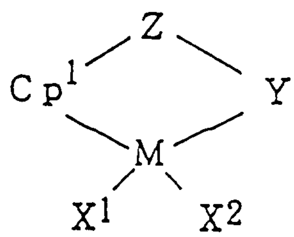

(2)

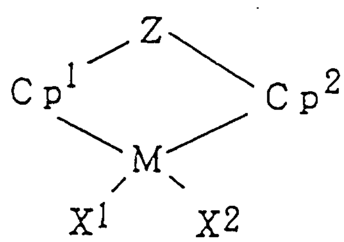

wherein M is a transition metal belonging to group IVB in periodic table; $Cp^1$ and $Cp^2$ are each a cyclopentadienyl group or a derivative thereof which can be π-bonded to M; $X_1$ and $X_2$ are each an anionic ligand or a neutral Lewis basic ligand; Y is a ligand having at least one atom selected from the group consisting of nitrogen, phosphorus, oxygen, and sulfur;

and Z is a ligand having at least one atom selected from oxygen, sulfur, boron and atoms in group IVA of periodic table, wherein Y and Z may be linked together to form a condensed ring; and

an ingredient (D) which is methyl aluminoxane.

**8.** An ethylene type quaternary copolymer rubber according to any of claims 1 to 6 obtainable by polymerizing ethylene, an α-olefin, a non-conjugated diene, and a vinylidene aromatic monomer while using a catalyst system containing:

an ingredient (A) as defined in claim 7;

an ingredient (B) which is a borate compound; and

an ingredient (C) which is an organic aluminum compound.

**9.** An ethylene type quaternary copolymer rubber according to any of claims 1 to 6 obtainable by polymerizing ethylene, an α-olefin, a non-conjugated diene, and a vinylidene aromatic monomer while using a catalyst system containing:

an ingredient (A) as defined in claim 7;

an ingredient (B) which is a borate compound; and

an ingredient (D) which is methyl aluminoxane.

Figure

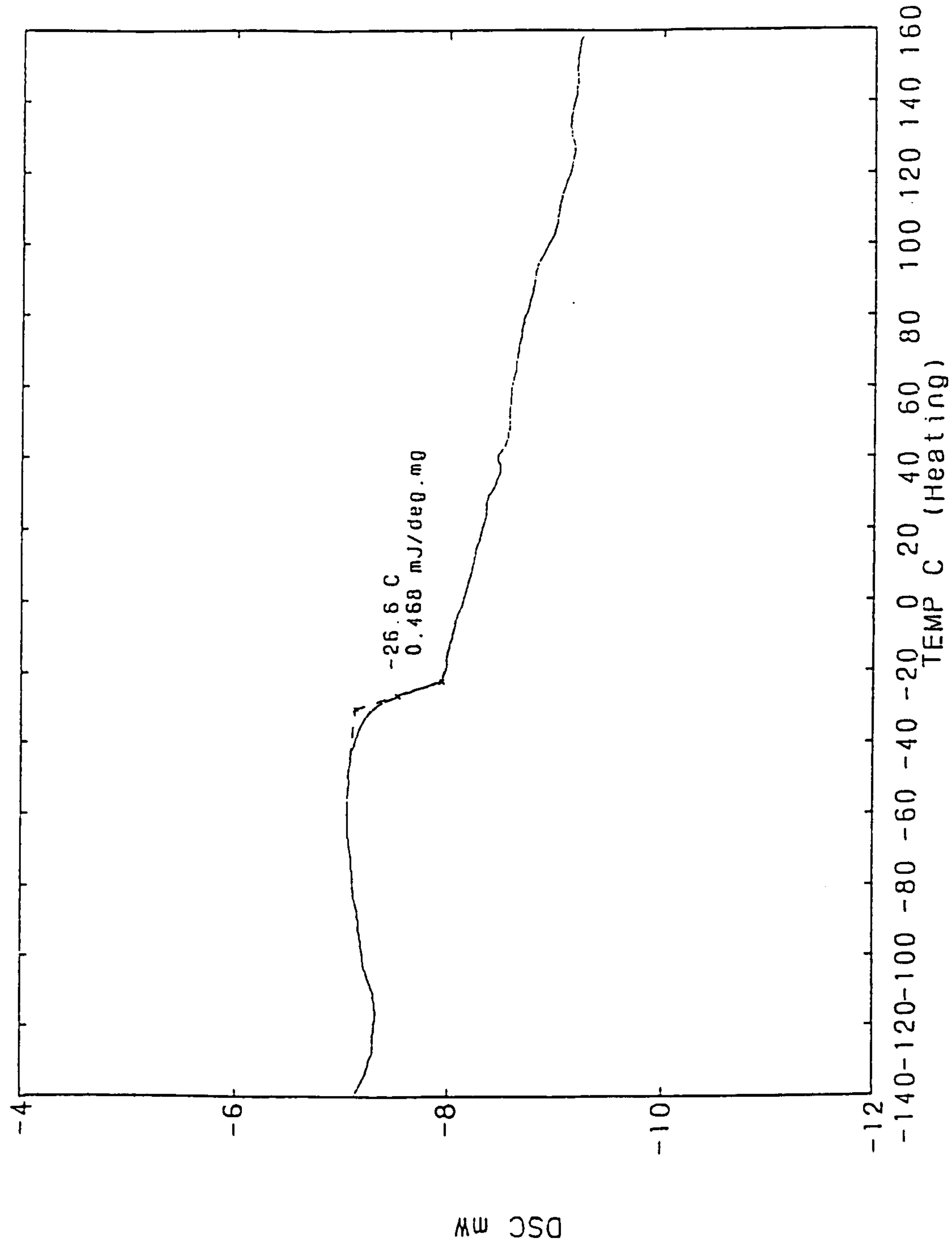
-26.6 C
0.468 mJ/deg.mg
DSC mW
-4
-6
-8
-10
-12
-140 -120 -100 -80 -60 -40 -20 0 20 40 60 80 100 120 140 160
TEMP C (Heating)